# EUROPEAN PATENT SPECIFICATION

(11) **EP 0 522 170 B1**
(45) Date of publication and mention of the grant of the patent: **19.03.1997**
(21) Application number: 92903330.6
(22) Date of filing: 16.01.1992
(51) Int. Cl.: G11B 7/00

(54) **RECORDING/REPRODUCING APPARATUS**
AUFZEICHNUNGS-/WIEDERGABEGERÄT
APPAREIL D'ENREGISTREMENT/LECTURE

(30) Priority: 25.01.1991 JP 25569/91
(43) Date of publication of application: 13.01.1993
(73) Proprietor: SONY CORPORATION, Tokyo 141 (JP)
(72) Inventor: YOSHIDA, Tadao Sony Corporation, Tokyo 141 (JP); FUJISAWA, Hirotoshi Sony Corporation, Tokyo 141 (JP)
(74) Representative: Cotter, Ivan John
(86) International application number: PCT/JP92/00029
(87) International publication number: WO 92/13342

(56) References cited:
- EP-A- 0 202 655
- JP-A- 1 271 920
- US-A- 4 746 013

## Description

The invention relates to an optical recording and/or reproducing system which uses as a recording medium an optical disc cartridge which houses a disc such as magneto-optical disc or optical disc rotatable therein for recording given informational signals thereon.

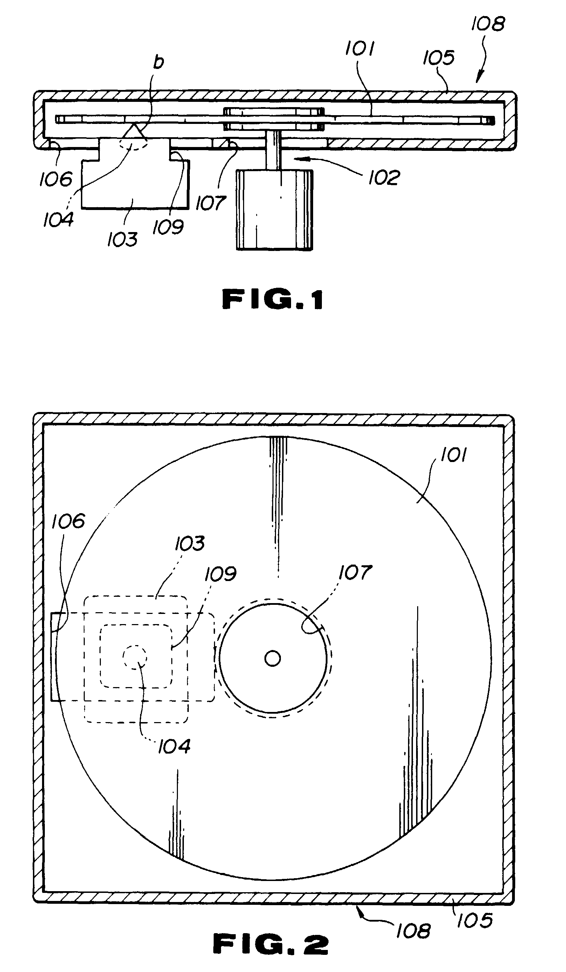

Discs such as magneto-optical discs or optical discs have heretofore been used as recording media of informational signals. Figures 1 and 2 of the accompanying drawings show that a disc 100 comprises a disc-shaped disc substrate made of a material having a light transmitting ability and a signal recording layer on at least one side of the disc substrate. When recording and/or reproducing of information signal on and from the disc 101, the disc is loaded on a recording and/or reproducing apparatus using this disc as the recording medium. The disc 101 which is loaded on the recording and/or reproducing apparatus is supported at the centre thereof by a disc rotating drive mechanism 102 disposed in the recording and/or reproducing apparatus and is driven to rotate around its centre by the same mechanism 102. Accordingly, the disc 101 is formed with a recording area of the information signal having the signal recording layer on a peripheral area which is located outside the portion supported by the disc rotating drive mechanism 102.

Writing of an information signal on the disc 101 or reading of the information signal recorded on the disc 101 is carried out by an optical pick-up device 103 disposed in the recording and/or reproducing apparatus. The optical pick up device 103 comprises a light source and an objective lens 104 disposed at a point on an optical axis for condensing a light beam emitted from the light source so that the light beam from the light source is converged upon the signal recording portion of the disc 101. In other words, the light beam which is emitted from the light source and is impinged upon the signal recording portion of the disc 101 via the objective lens 104 is controlled in such a manner that it is constantly focused upon the signal recording portion of the disc 101.

In the case in which an information signal is recorded on a magneto-optical disc having a signal recording layer made of a magneto-optical material, an external magnetic field generating device for applying an external magnetic field to the signal recording layer is needed in addition to an optical pick-up device for emitting a light beam.

The optical pick-up device 103 is provided with an objective lens drive mechanism 109 for moving the objective lens 104 in two directions including an axial direction and a direction perpendicular to the axial direction so that the light beam emitted from the light source is constantly focused upon the signal recording portion of the disc 101 even when the surface of the disc 101 is oscillated or the disc 101 is eccentrically moved due to the rotation by the disc rotating drive mechanism 102. The objective lens drive mechanism 109 supports the objective lens 104 on a supporting member (not shown) in such a manner that the objective lens 104 is movable in an optically axial direction and in a direction perpendicular to the optical axis. The objective lens drive mechanism 109 drives the objective lens 104 along an optical axis and in a direction perpendicular to the optical axis by means of an electromagnetic actuator and the like.

For protecting the disc 101 from being contaminated with dust or being damaged by fingers on handling thereof and for easy handling, a disc cartridge 108 is provided as shown in Figures 1 and 2 in which the disc 101 is housed in a cartridge main body 105 which is a square box. The disc cartridge 108 houses the disc 101 so that the disc 101 can be rotated therein by means located externally of the cartridge main body 105. The cartridge main body 105 which houses the disc 101 therein is provided on at least one main side thereof with a recording and/or reproducing opening 106 through which at least a part of a signal recording area of the disc 101 is exposed in a radial direction and a chucking opening 107 through which the central portion of the disc 101 formed with a centre hole is exposed. Accordingly, the disc 101 housed in the disc cartridge 108 is supported formed with the centre hole on the central portion and is rotated therearound by the disc rotating drive mechanism 102 which is disposed to one side of the recording and/or producing apparatus and is projected into the cartridge main body 105 through the chucking opening 107. Writing and/or reading of information signals is carried out by the optical pick-up device 103 which faces the disc 101 through the recording and/or reproducing opening 106.

The recording and/or reproducing opening 106 which is formed on the cartridge main body 105 is closed by a shutter member (not shown) for protecting the disc 101 during non use of the disc cartridge 105. The shutter member has a shutter portion which is formed to a size sufficient to close at least the recording and/or reproducing opening 106 and is movable in a direction such that it can open and close the recording and/or reproducing opening 106 and is supported on the cartridge main body 105. Accordingly, the shutter member is moved to a position in which it closes the recording and/or reproducing opening 106 during non use of the disc cartridge 106 while it is moved by a shutter opening mechanism to a position provided in the side of the recording and/or reproducing apparatus in which it opens the recording and/or reproducing opening 106 in a use mode in which the disc cartridge 108 is loaded into the recording and/or reproducing apparatus.

In the above mentioned recording and/or reproducing apparatus, the distance between a first surface of the disc 101 to which the objective lens 104 faces and the signal recording layer, i.e. working distance is determined by the optical characteristics of the objective lens 104 of the optical pick-up device. In order to increase the density of the information signals which are written to and/or read from the signal recording layer, it is necessary to converge a light beam b on the signal recording layer as a smaller spot. To this end, the working distance is made as short as possible so far as no problem arises in design and manufacture of the objective lens 104.

Since the working distance is made as short as possible, it is necessary to position the objective lens 104 as closely as possible to the disc 101 by moving the objective lens drive mechanism 109 having a diameter larger than the outer diameter of the objective lens 104 as shown in Figure 1 when writing and/or reading of the information signals is made to and/or from the disc 101 by using the optical pick-up device 103.

In order to enable the objective lens drive mechanism 109 having a larger diameter to move into the cartridge main body 105, it is necessary to form the cartridge main body 105 with the recording and/or reproducing opening 106 of sufficient size to enable the objective lens drive mechanism 109 to move into the cartridge main body 105.

If a larger recording and/or reproducing opening 106 is formed in order to meet the above mentioned requirements, it is also necessary to provide a larger shutter member for opening and closing the recording and/or reproducing opening 106. This makes it difficult to provide a compact disc cartridge 108 since the shutter member is movably supported by the cartridge main body 105 so that it opens and closes the recording and/or reproducing opening 106 as mentioned above. If the recording and/or reproducing opening 106 is made larger, it becomes very difficult to form a flat main side of the disc cartridge since the cartridge main body 105 is formed of a synthetic resin by a moulding method such as injection moulding using an injection moulding machine.

Our patent specification US-A-4 746 013 discloses in Figures 15 and 16 thereof a disc cassette with an opening for a read/write head which extends radially of the disc and can be seen to be approximately a third of the diameter of the disc in width, a shutter which is of a width greater than the width of the opening can be moved from a closed position over the opening to an open position either to the right or to the left of the opening by a movement distance substantially equal to the full width of the opening.

According to the invention is there provided an optical recording and/or reproducing system including an optical disc cartridge housing an optical disc rotatable therein for recording and/or reproducing informational signals on and/or from the optical disc by irradiating the optical disc with a light beam from an optical pick-up device through an opening formed in the disc cartridge; and
in which the optical pick-up device comprises a light source and an objective lens which converges the light beam from the light source upon a signal recording area of the optical disc;
characterised in that the opening extends generally radially of the optical disc and is of a width only slightly larger than the outer diameter of the objective lens, and only the objective lens is moved into the disc cartridge through the opening of the disc cartridge when recording and/or reproducing of information signals on and/or from the optical disc is performed by means of the optical pick-up device.

In such a system the cartridge which houses the informational signal recording disc therein need not be increased in size, can easily be formed of a synthetic resin by a moulding method such as injection moulding and is capable of achieving an improvement in recording and/or reproducing characteristics of the informational signal with respect to a disc.

The invention is diagrammatically illustrated by way of example with reference to the accompanying drawings, in which:-
Figure 1 is a longitudinal sectional view showing an optical pick-up device of an prior art recording and/or reproducing apparatus and a disc cartridge which is used for the recording and/or reproducing apparatus;
Figure 2 is a plan view showing the structure of the optical pick-up device and the disc cartridge of the prior art recording and/or reproducing apparatus;
Figure 3 is a longitudinal sectional view showing an optical pick-up device of a recording and/or reproducing system of the present invention and a disc cartridge used in the recording and/or reproducing system;
Figure 4 is a plan view corresponding to Figure 5; and
Figure 5 is an enlarged longitudinal sectional view showing the optical pick-up device and the disc cartridge when not in use.

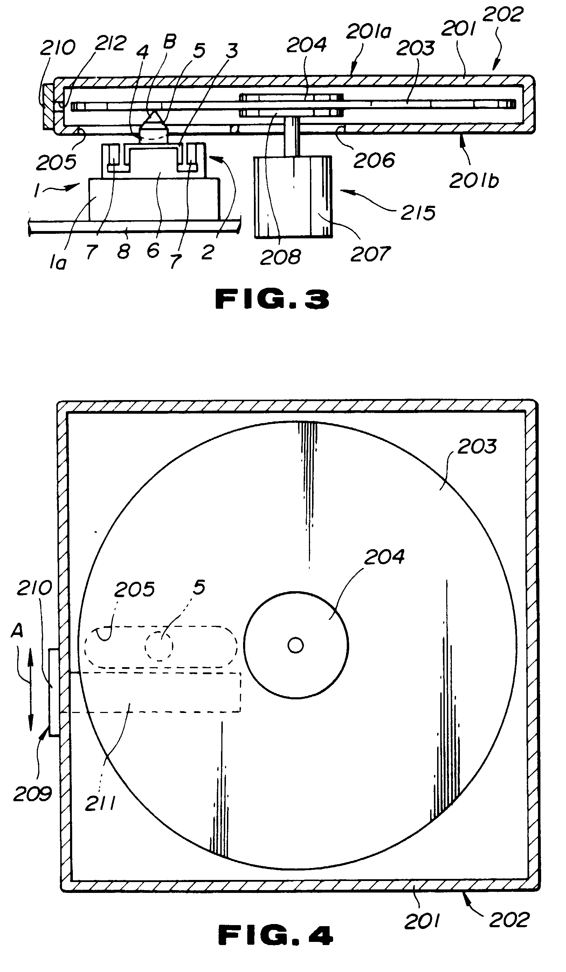

Referring to the drawings and particularly to Figure 3, 4 and 5, a recording and/or reproducing system comprises a disc 203 which is an optical disc as will be described thereafter. This disc 203 is housed in a cartridge main body 201 to form a disc cartridge 202. The disc cartridge 202 is loaded into recording and/or reproducing apparatus while the disc 203 is housed in the cartridge main body 201. The recording and/or reproducing apparatus uses an optical pick-up device as recording and/or reproducing means for recording and/or reproducing information signals on and from the disc 202 which is housed in the disc cartridge 202.

The optical pick-up device 1 which forms the recording and/or reproducing apparatus has an optical block unit 1a which is supported on a guide member 8 disposed in the recording and/or reproducing apparatus. A light source such as a laser diode and an optical device such as collimator lens for directing a light beam emitted from the light source to an objective lens 5 are provided in the optical block unit 1a. The optical block unit 1a is supported in such a manner that the guide block unit 1a is movable in a radial direction of the disc 203 along the guide member 8. The optical block unit 1a is moved in a radial direction of the disc 203 by drive means (not shown) when the disc cartridge 202 is loaded on the recording and/or reproducing apparatus for recording and/or reproducing information signals on and from the disc 203 in the disc cartridge 202.

An objective lens drive device 2 is mounted on the optical block unit 1a. The objective lens drive device 2 has the objective lens 5 upon which the light beam emitted from the light source in the optical block unit 1a is incident. The objective lens drive apparatus 2 includes a magnetic yoke 6 to which a plurality of magnets 7 are mounted and a lens bobbin 3 for supporting the objective lens 5. The magnetic yoke 6 is secured to the optical block 1a.

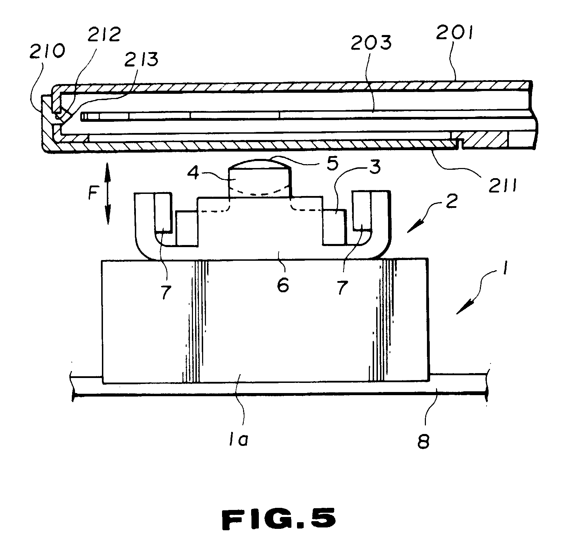

The lens bobbin 3 is supported on a support member such as a wire or leaf spring (not shown) which is made of a material having an elasticity os that it is displaced relative to the magnetic yoke 6. Solenoids (not shown) are mounted on the lens bobbin in position opposite to the magnets 7. When a drive current responsive to a focus error signal or a tracking error signal is supplied to the solenoids, the lens bobbin 3 is driven to be displaced in a focusing direction which is an optical axis direction of the objective lens 5 represented by an arrow F in Figure 5 and in a tracking direction normal to the optical axis direction by the action between a magnetic force formed by the drive current and the magnetic fields formed by the magnets 7. A d.c. like drive signal for moving the objective lens 5 into the disc cartridge 202 which is superimposed upon the focusing and tracking signals is supplied to the solenoids of the objective lens drive device 2 when an information signal is recorded and/or reproduced on and/or from the disc 203 in the disc cartridge 202.

The objective lens 5 is mounted on the lens bobbin 3 with an objective lens support member 4 sandwiched between the lens 5 and the bobbin 3. The objective lens support member 4 is formed into a cylindrical shape substantially corresponding to the outer contour of the objective lens 5. The objective lens support member 4 has a base and tip ends which are mounted on the lens bobbin 3 and the objective lens 5, respectively. The objective lens 5 is supported on the objective lens support member 4 so that it projects from the upper surface of the lens bobbin 3 in a light beam emitting direction along the optical axis of the objective lens 5. The objective lens 5 is supported on the lens bobbin 3 and the objective lens support member 4 and is mounted on the optical block unit 1a in a position where the light beam which is emitted from the optical block unit 1a and transmitted through the objective lens support member 4 is incident. Accordingly, the objective lens 5 emits the light beam which is emitted from the optical block unit 1a and is incident thereto as a light beam B which will be converged upon a point on the signal recording surface of the disc 203.

The disc 203 used in the present embodiment is an optical disc and comprises a disc substrate which is made of a synthetic resin material having a light transmitting ability such as polycarbonate resin into a disc shaped and a signal recording layer which is formed as a thin film on at least one main side of the disc substrate. A disc hub 204 for supporting the disc 203 on a disc rotating drive mechanism 215 disposed in the recording and/or reproducing apparatus of the present invention is mounted on the disc 203 in the centre thereof. The disc hub 204 is formed of a magnetic material such as a metal plate into a disc shape. An annular area between the outer periphery of the disc hub 204 and the outermost periphery of the disc substrate forms a signal recording area which is formed with the signal recording layer in which recording and/or reproducing of the information signal is carried out by the optical pick-up device 1.

The cartridge main body 210 which constitutes the disc cartridge 202 is formed by abut-bonding upper and lower square halves into a thin box having enough size rotatably to house the disc 203. In other words, one side of the upper and lower main sides 201a and 201b of the cartridge main body 201, which face to the main side of the housed disc 203 has a length which is slightly longer than the diameter of the disc 203. the distance between the opposing inner surfaces of the main sides 201a and 201b, i.e. the thickness of the disc housing space formed in the cartridge main body 201 is slightly larger than the thickness of the disc hub 204.

The cartridge main body 201 is formed with the recording and/or reproducing opening 205 on the lower side 201b thereof. The recording and/or reproducing opening 205 is an elongate approximately rectangular through-hole. The opening 205 extends from the vicinity of the centre of the lower main side 201b to the vicinity of one of the side edges of the lower main side and has a width which is slightly larger than the outer diameter of the objective lens 5. A part of the signal recording area which faces to the lower main side 201b of the disc 203 is exposed in a radial direction of the disc 203 through the recording and/or reproducing opening 205. The optical pick-up device 1 irradiates the signal recording area with the light beam B via this recording and/or reproducing opening 205 for recording and/or reproducing informational signal on and/or from the disc 205.

The lower main side 201b of the cartridge main body 201 is provided with an approximately circular chucking opening 206 in the centre thereof. The lower side of the disc hub 204 is externally exposed through the chucking opening 206. The disc rotating drive mechanism 215 moves a disc table 208 supported on a rotary shaft of a spindle motor 207 into the cartridge main body 201 through the chucking opening 206 so that the disc 203 is chucked by attracting the disc hub 204 by the magnets provided on the disc table 208.

The shutter member 209 is mounted on the thus formed cartridge main body 201 as shown in Figure 4. The shutter member 209 is provided for opening and/or closing the recording and/or reproducing opening 205. The shutter member 209 comprises a slider portion 210 which is supported on the cartridge main body 201 along one side of the cartridge main body 201 and a shutter portion 211 for opening and/or closing the recording and/or reproducing opening 205 and is integrally formed of a synthetic resin material such as polyacetal to possess an L-shaped section. The slider portion 210 which forms the shutter member 209 is formed into an elongate rectangular plate having a width substantially equal to the thickness of the cartridge main body 201. The shutter portion 201 is formed into a rectangular plate having a uniform thickness, which is larger in size than the recording and/or reproducing opening 205 and extends on the lower main side of 201b of the cartridge main body 201.

The shutter member 209 is mounted on the cartridge main body 201 by engaging an engagement pawl 213 projecting on the inner side of the slider portion 210 with an engagement groove 212 formed on one side of the cartridge main body 201 so that the shutter member 209 is guided by the engagement groove 212 to slide in a direction of an arrow A in Figure 4. The shutter member 209 is slidable between positions where the shutter portion 211 closes and opens the recording and/or reproducing opening 205.

Since the recording and/or reproducing opening 205 is formed so that it has a width slightly larger than the outer diameter of the objective lens 5 of the optical pick-up device 1 in the disc cartridge 202, it suffices that the shutter portion 211 of the shutter member 209 also has a width slightly larger than the outer diameter of the objective lens 5. Accordingly, the necessity to make larger the cartridge main body 201 forming the disc cartridge 202 for providing the moving area of the shutter member 9 for opening and closing the recording and/or reproducing opening 205 is eliminated.

In the thus formed recording and/or reproducing apparatus, application of a drive signal upon the solenoids of the objective lens drive device 2 is prevented when the apparatus is not driven. Accordingly, the lens bobbin 3 which supports the objective lens 5 is in a position where it is retracted toward the optical block portion 1a as shown in Figure 5. When the lens bobbin 3 is in the retracted position, the disc cartridge 202 can be slid in a horizontal direction over the optical pick-up device 1 without contacting with the objective lens 5 so that it will be loaded into the cartridge loading portion in the recording and/or reproducing apparatus.

When the disc cartridge 202 is not in use, that is when it is not loaded in the recording and/or reproducing apparatus, the shutter member 209 is in a closed position in which the recording and/or reproducing opening 205 is closed by the shutter portion 211. In other words, entry of dust and fingers into the cartridge main body 201 is prevented by closing the recording and/or reproducing opening 205 is closed by the shutter portion 211.

When the disc cartridge 202 is loaded in the recording and/or reproducing apparatus, the disc 203 is supported on the disc table 208 of the disc rotating drive mechanism 215 and the shutter member 209 is slid toward a position in which the opening is opened by shutter opening mechanism disposed in the side of the recording and/or reproducing apparatus, for opening the recording and/or reproducing opening 205. The objective lens 5 of the optical pick-up device 1 faces to the disc 203 supported on the disc table 208 through the opened recording and/or reproducing opening 205.

When the disc cartridge 202 is loaded into the recording and/or reproducing apparatus of the present invention and the spindle motor 207 of the disc rotating drive mechanism 215 is driven to rotate so that recording and/or reproducing of information signals on and/or from the disc 203 is enabled by the optical pick-up device 1 in the recording and/or reproducing apparatus of the present invention, a drive signal is applied to the solenoid of the objective lens drive device 2 for moving the lens bobbin 3 toward the disc cartridge 202. The movement of the lens bobbin 3 causes the objective lens 5 to move into the cartridge main body 201 through the opened recording and/or reproducing opening 205. At this time, the objective lens 5 is remote from the signal recording area of the disc 203 by a given working distance determined by the optical characteristics of the objective lens 5 and faces thereto. The objective lens 5 converges the light beam emitted from the optical block unit 1a upon the signal recording area of the disc 203. In such a manner, writing and/or recording of informational signal to and/or from the signal recording area is carried out by the optical pick-up device 1 on exposure of the signal recording area of the disc 203 to the converged light beam B.

The recording and/or reproducing apparatus transmits and receives informational signals to and from the optical pick-up device 1 via an signal processor which is located internally or externally of the apparatus for recording and/or reproducing information signals on and/or from the disc 203.

The recording and/or reproducing apparatus may be formed as an apparatus for reproducing information signals by using a so-called magneto-optical disc as well as the apparatus for recording and/or reproducing informational signal by using the above mentioned optical disc 203.

In the apparatus for recording and/or reproducing information signals by using the magneto-optical disc as a recording medium, the disc cartridge 202 is formed with recording and/or reproducing openings on both the opposite main sides thereof and an optical pick-up device is moved into the recording and/or reproducing opening on one of the main side which an external magnetic field generating device is moved into or is opposite to the recording and/or reproducing opening on the other main side. In this case, a shutter member disposed on the disc cartridge 202 is formed into Σ-shaped section so that it has a pair of shutter portions enabling the recording and/or reproducing openings formed on the opposite main sides to be closed.

When the disc which is used in a cartridge main body and a part of the signal recording area, of which is externally exposed through the recording and/or reproducing opening formed on the cartridge main body is irradiated with the light beam from the optical pick-up device for recording and/or reproducing information signals on and/or from the disc in the recording and/or reproducing apparatus as mentioned above, only the objective lens of the optical pick-up device is moved towards the disc into the cartridge main body through the opening.

Accordingly, the recording and/or reproducing apparatus is capable of recording and/or reproducing informational signals on and/or from the disc by means of the optical pick-up device even if the opening formed on the cartridge main body has such a size that only the objective lens of the optical pick-up device can be moved through the opening. It is not necessary to provide a larger opening which allows the objective lens drive mechanism having a size larger than the outer diameter of the objective lens to move into the cartridge main body in order to shorten the distance between the objective lens of the optical pick-up device and the disc, i.e. the working distance. Since making the shutter member for opening and closing the opening compact can be thus achieved, it is possible to reduce the moving area of the cartridge main body in which the shutter member is moved for opening and closing the opening and thus a compact disc cartridge on which the shutter member is mounted can be provided.

## Claims

1. An optical recording and/or reproducing system including an optical disc cartridge (202) housing an optical disc (203) rotatable therein for recording and/or reproducing informational signals on and/or from the optical disc (203) by irradiating the optical disc (203) with a light beam from an optical pick-up device (1) through an opening (205) formed in the disc cartridge (202); and
in which the optical pick-up device (1) comprises a light source and an objective lens (5) which converges the light beam from the light source upon a signal recording area of the optical disc (203);
characterised in that the opening (205) extends generally radially of the optical disc (203) and is of a width only slightly larger than the outer diameter of the objective lens (5), and only the objective lens (5) is moved into the disc cartridge (202) through the opening (205) of the disc cartridge (202) when recording and/or reproducing of information signals on and/or from the optical disc (203) is performed by means of the optical pick-up device (1).

2. An optical recording and/or reproducing system according to claim 1, including drive means (2) for moving the objective lens into a disc cartridge main body (201) when information signals are recorded and/or reproduced on and/or from the optical disc (203) housed in the disc cartridge (202) by the optical pick-up device (1).

3. An optical recording and/or reproducing system according to claim 2, in which the drive means (2) is provided on the optical pick-up device (1).

4. An optical recording and/or reproducing system according to claim 2, in which the drive means (2) comprises a support portion (4) for supporting the objective lens (5) in a projecting state; and a drive portion (6,7) for movably supporting the objective lens (2) at least along the optical axis of the objective lens (5) and for moving it along at least the optical axis thereof.

## Patentansprüche

1. Optisches Aufzeichnungs- und/oder Wiedergabesystem mit einer Einschubkassette (202) für eine optische Platte, einer optischen Platte (203), die darin drehbar ist, um Informationssignale auf und/oder von der optischen Platte (203) durch Bestrahlung der optischen Platte (203) mit einer Lichtstrahl von einer optischen Aufnehmeeinrichtung (1) durch eine Öffnung (205), die in dem Platteneinschub (202) ausgebildet ist, aufzuzeichnen und/oder wiederzugeben; und
bei der die optische Aufnehmeeinrichtung (1) eine Lichtquelle und eine Objektivlinse (5) aufweist, die den Lichstrahl von der Lichtquelle auf einen Signalaufzeichnungsbereich der optischen Platte (203) konvergiert;
**dadurch gekennzeichnet**, daß die Öffnung (205) sich allgemein radial auf der optischen Platte (203) erstreckt und eine Weite aufweist, die nur etwas größer als der Außendurchmesser der Objektivlinse (5) ist, und wobei nur die Objektivlinse (5) in der Platteneinschubkassette (202) durch die Öffnung (205) der Platteneinschubkassette (202) bewegt wird, wenn die Aufzeichnung und/oder Wiedergabe von Informationssignalen auf und/oder von der optischen Platte (203) mittels der optischen Aufnehmeeinrichtung (1) durchgeführt wird.

2. Optisches Aufzeichnungs- und/oder Wiedergabesystem nach Anspruch 1, das eine Antriebseinrichtung (2) aufweist, um die Objektivlinse in einen Hauptkörper (201) der Platteneinschubkassette zu bewegen, wenn Informationssignale auf und/oder von der optischen Platte (203), die in dem Platteneinschub (202) mittels der optischen Aufnehmeeinrichtung (1) aufgenommen ist, aufgezeichnet und/oder wiedergegeben werden.

3. Optisches Aufzeichnungs- und/oder Wiedergabesystem nach Anspruch 2, bei dem die Antriebseinrichtung (2) auf der optischen Aufnehmeeinrichtung (1) vorgesehen ist.

4. Optisches Aufzeichnungs- und/oder Wiedergabesystem nach Anspruch 2, bei dem die Antriebseinrichtung (2) einen Trageabschnitt (4), um die Objektivlinse (5) in einen vorspringenden Zustand zu tragen, und einen Antriebsabschnitt (6, 7) aufweist, um die Objektivlinse (2) zumindest entlang der optischen Achse der Objektivlinse (5) bewegbar zu tragen, und um sie zumindest entlang der optischen Achse davon zu bewegen.

## Revendications

1. Système d'enregistrement et/ou de lecture optique comprenant une cartouche (202) de disque optique logeant un disque optique (203) qui peut tourner à l'intérieur pour l'enregistrement et/ou la lecture de signaux d'information sur le disque optique (203) par irradiation du disque optique (203) avec un faisceau lumineux provenant d'un dispositif capteur optique (1) et passant dans une ouverture (205) formée dans la cartouche de disque (202), et
dans lequel le dispositif capteur optique (1) comporte une source lumineuse et un objectif (5) qui fait converger le faisceau lumineux de la source sur une région d'enregistrement de signaux du disque optique (203),
caractérisé en ce que l'ouverture (205) a une direction générale radiale par rapport au disque optique (203) et a une largeur qui n'est que légèrement supérieure au diamètre externe de l'objectif (5), et seul l'objectif (5) est déplacé dans la cartouche de disque (202) par l'ouverture (205) de cette cartouche (202) lorsque l'enregistrement et/ou la lecture des signaux d'information sont réalisés sur le disque optique (203) à l'aide du dispositif capteur optique (1).

2. Système d'enregistrement et/ou de lecture optique selon la revendication 1, comprenant un dispositif d'entraînement (2) destiné à déplacer l'objectif dans un corps principal (201) de cartouche de disque lorsque des signaux d'information sont enregistrés et/ou lus sur le disque optique (203) logé dans la cartouche de disque (202) par le dispositif capteur optique (1).

3. Système d'enregistrement et/ou de lecture optique selon la revendication 2, dans lequel le dispositif d'entraînement (2) est placé sur le dispositif capteur optique (1).

4. Système d'enregistrement et/ou de lecture optique selon la revendication 2, dans lequel le dispositif d'entraînement (2) comporte une partie (4) de support de l'objectif (5) en position en saillie, et une partie d'entraînement (6, 7) destinée à supporter l'objectif (2) afin qu'il soit mobile au moins le long de l'axe optique de l'objectif (5) et à le déplacer le long de l'axe optique au moins.
